# EUROPEAN PATENT SPECIFICATION

(11) **EP 2 105 863 B1**
(45) Date of publication and mention of the grant of the patent: **13.09.2017**
(21) Application number: 08103082.7
(22) Date of filing: 28.03.2008
(51) Int. Cl.: G01N 15/14, G06K 9/00, G06K 9/62

(54) **Method and system for the automatic classification of events acquired by a flow cytometer**
Verfahren und System zur automatischen Klassifizierung von durch ein Flusszytometer erfassten Ereignissen
Procédé et système pour la classification automatique d'événements acquis par un cytomètre de flux

(43) Date of publication of application: 30.09.2009
(73) Proprietor: Cytognos, S.L., 37900 Santa Marta de Tormes, Salamanca (ES)
(72) Inventor: Castaño Gracia, Miguel, Santa Marta de Tormes, 37900 Salamanca (ES)
(74) Representative: Pons

(56) References cited:
- EP-A- 1 686 494
- EP-A- 1 785 899
- US-A- 4 661 913
- US-A1- 2002 029 235
- RICHARD O. DUDA, PETER E. HART, DAVID G. STORK: "Pattern Classification" 1 January 2001 (2001-01-01), WILEY-INTERSCIENCE , NEW YORK , XP002493174 * page 164 - page 188 * * page 537, line 42 - line 46 *
- NUANNUAN ZONG ET AL: "A New Clustering Algorithm of Large Datasets with O(N) Computational Complexity" INTELLIGENT SYSTEMS DESIGN AND APPLICATIONS, 2005. ISDA '05. PROCEEDIN GS. 5TH INTERNATIONAL CONFERENCE ON WARSAW, POLAND 08-10 SEPT. 2005, PISCATAWAY, NJ, USA,IEEE, 8 September 2005 (2005-09-08), pages 79-82, XP010881489 ISBN: 978-0-7695-2286-9

## Description

### FIELD OF THE INVENTION

The invention relates to the field of techniques for classifying sets of multidimensional data so as to distinguish inside them different groups or populations of elements identifiable by certain characteristics of their associated measured parameters. These techniques are useful in a variety of domains, including medicine and biology, and in particular in the field of cellular analysis of blood or other biological samples by flow cytometry, a technique by which several characteristics of microscopic components of a biological sample, such as blood cells, are measured and recorded inside an apparatus called flow cytometer that drives them one by one through a region equipped with one or more lasers and appropriate light detectors.

### BACKGROUND OF THE INVENTION

Flow cytometry is a domain where the use of computer-assisted techniques for classification of multidimensional data is particularly useful if not essential. The aim of this technology is to classify the cells or other particles detected by the flow cytometer into categories relevant for the diagnostic or other purpose for which the biological analysis is performed. For example, in a basic blood analysis, doctors must know the respective concentrations in the sample of the cells of the basic types: red blood cells (RBC), platelets, or white blood cells (WBC), which, in turn, can be classified into sub-groups such as granulocytes, monocytes or lymphocytes. There are also specialized forms of blood or sample analysis oriented to the diagnostic of specific diseases, which, in general, imply further subdivisions of the above categories, for example T of B lymphocytes, which in turn may be of many different kinds. Currently, and for the foreseeable future, the progress in this field is associated to a continuous increase of the number of types of cells that can and must be distinguished. For example, it is increasingly frequent that some form of cancer that was considered a single disease several years ago is now found to have in fact several variants caused by mutations of different genes and for which some treatments may not produce the same results.

To classify cells in an ever-increasing number of possible categories, the number of characteristics of each cell that must be measured also increases as this domain of science progresses. This number of characteristics essentially corresponds to the number of dimensions of the data that must be analysed, and therefore this analysis represents a problem of increasing complexity.

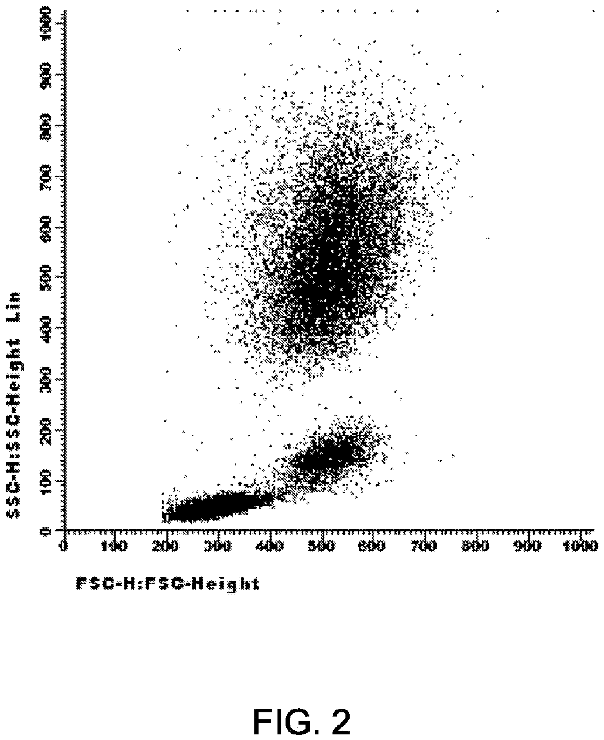

Since the invention of flow cytometry and still nowadays, the method most frequently used to classify the cells detected by a flow cytometer into different categories has consisted essentially in using a computer to generate two-dimensional views of the information given by the flow cytometer, in which each cell is represented as a point and only two of the parameters measured for each cell can be represented at a time. An example of such representation can be seen in Fig. 2. In these graphs, it is possible in general to identify the different populations of cells as groups of points and indicate to the computer the presence of relevant groups by surrounding them with closed curves as in Fig. 2. The problem of this method is that, as the number of dimensions of the problem grows, the technicians must identify clusters of cells in an increasing number of graphs, and with increasing frequency the clusters that can be seen in these graphs are in fact a superposition of several populations that must be painstakingly separated in other graphs representing other pairs of coordinates, making the analysis process increasingly time-consuming, tedious and prone to errors.

These problems could be solved or greatly alleviated by using computer systems capable of performing automatically the classification of events and leaving to the technicians only the task of revising the results and retouching them in case of need. However, for reasons of computing performance, so far it has been possible to produce reliable and practical such systems only for problems of medium or low complexity, for which it suffices to identify automatically clusters only in two-dimensional projections. By contrast, it seems clear that, for automatic analysis systems suitable for problems with many dimensions, clustering and subsequent identification of populations should be better done directly in a multidimensional representation involving simultaneously all the parameters measured for the cells. This is one of the points addressed by the invention described here.

With regard to automatic clustering and analysis of multiparametric data, it has been possible to find in the available literature, patent-related or not, only descriptions of systems performing clustering in two dimensions, so it can be said that in this aspect the present invention represents a significant improvement.

Other important aspects addressed by the present invention are the simplification of the task of the end-users operating and periodically calibrating and setting up the flow cytometers, and the possibility of integrating into a single analytical system modules developed by different manufacturers. In the field of automatic calibration of cytometers, all the descriptions found in the literature refer to systems performing the calibration as an operation separated from the acquisition and analysis of samples, and requiring the use of special types of particles manufactured specifically for calibration purposes. By contrast, the present invention does not require specific calibration operations and uses the references given by the positions of the populations identified in the samples to determine whether the cytometer settings should be adjusted. As for the aspects of modularity and integration of modules from different manufacturers, there seems to be no examples in the literature either.

### SUMMARY OF THE INVENTION

The invention deals with a method according to claim 1 and modular system recording to claim 6 designed to analyze sets of data elements that can be represented as points of a multidimensional space. In most practical uses, including for example applications of flow cytometry in medicine and biology, these points or data elements represent physical events such as the passage of cells or other microscopic particles through a certain region of a device equipped with suitable detectors, such as a flow cytometer. For this reason, these points or data elements will generally be called here "events", and their associated detected values, represented as coordinates in a multidimensional space, will be called "parameters". The device equipped with detectors will also be designated here as "acquisition device". The modular analytical system receives event information from the acquisition device by whatever means, for example through a real-time software interface, or a hardware transmission link, or through storage and later retrieval of data in files located in computer storage devices. The software integrated into the invention may reside in the same computer as the software controlling the acquisition device or in a separate one, and treats the above information by means of the following modules:
- A clustering module that tries to classify the events into groups (clusters) inside which the average or overall difference between the parameters of the events is significantly smaller than the average of the whole dataset, which is usually a strong indication that the events of each of these groups are of some specific type different from that of events of other groups. For example, in the analysis of cell samples through flow cytometry, the clusters typically correspond to different types of cells, such as red bloods cells (RBC) or white blood cells (WBC), which can further classified as granulocytes, monocytes, lymphocytes, etc.

The clustering module includes a first step of preparation of data structures that may be useful to accelerate subsequent steps of the identification process even if the step of clustering proper is not performed.
- An identification module that tries to classify the groups identified in the previous step, as well as the remaining isolated events, into categories predefined into the system together with associated sets of criteria applicable to the event parameters in order to identify the group to which each event presumably belongs.

This module may include an optional manual step through which, if necessary, the end-user can override all or part of the identifications performed by the computer.
- An optional real-time bi-directional link between the identification module and the acquisition device, by means of which the system can perform on-the-fly automatic corrections of the settings of the said device that would otherwise require the end-user to perform periodic calibration procedures on this device.

The invention comprises a set of preferred modules provided by the inventor and self-sufficient for most applications, but it allows the inclusion of additional modules developed by third parties, as a complement or a replacement for some of the preferred modules of the invention.

### BRIEF DESCRIPTION OF THE DRAWINGS

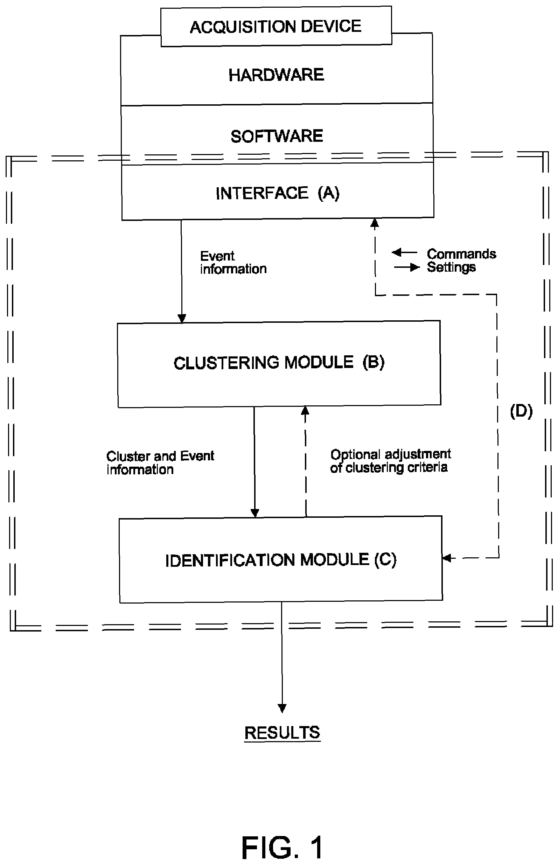

Fig. 1 is a schematic representation of an analytical system implementing the invention, represented here as the set of modules and links surrounded by a double discontinuous line. In general, none of these modules is mandatory, but at least a clustering module or an identification module must be present. The real-time link represented by a long discontinuous arrow is optional and allows automatic operation with practically no need of periodical calibration of the acquisition device by end-users. The software components of the analytical system may reside in the same computer as the software controlling the acquisition device or in a separate computer.
Fig. 2 is a copy of a typical two-dimensional projection of the multidimensional space of events, as currently used in manual cytometric analysis. Cytometrists select groups of events by surrounding them with a closed curve like the ellipse of the figure, and then inform the computer that the events of this group are cells or biological entities of a certain type, in this case monocytes.

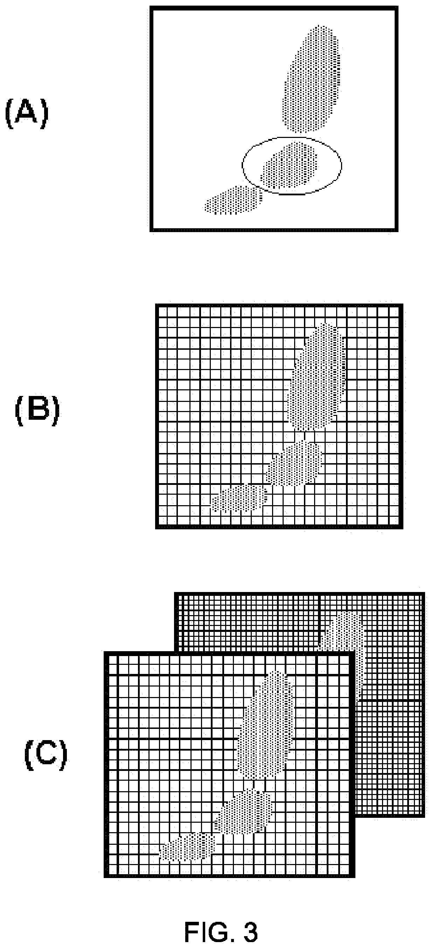

Fig. 3 shows an example of division of an n-dimensional space (here n = 2 for illustrative purposes) by means of one or more grids. The A view is a simplified representation of the two-dimensional projection represented in Fig. 2, as used currently in manual cytometric analysis. The B view shows the same 2-dimensional space divided by a single grid, suitable only for two-dimensional automated cluster analysis. The C view shows two grids of different sizes applied to the same 2-dimensional space. Unlike B, this method, when based on an appropriate number of grids of different sizes, can be applied to event spaces with large numbers of dimensions.

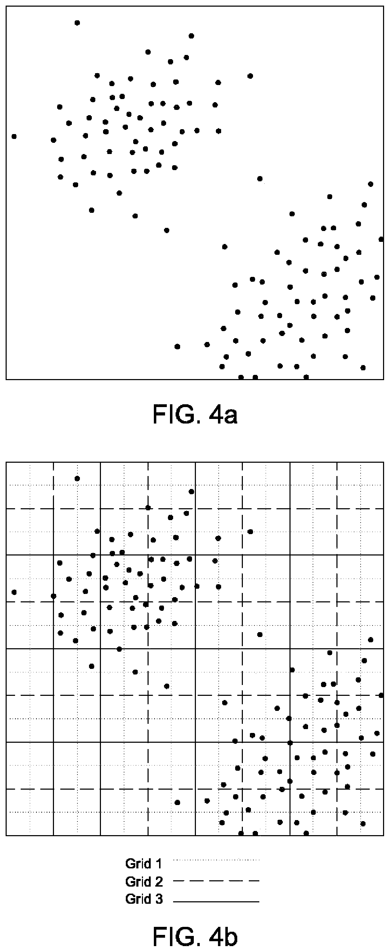

Figs. 4a-d disclose a bi-dimensional example of the preparation method of the invention.

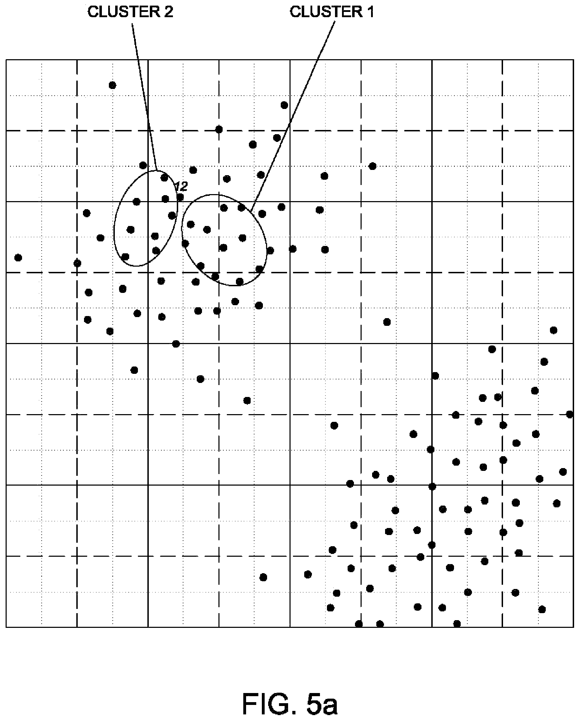

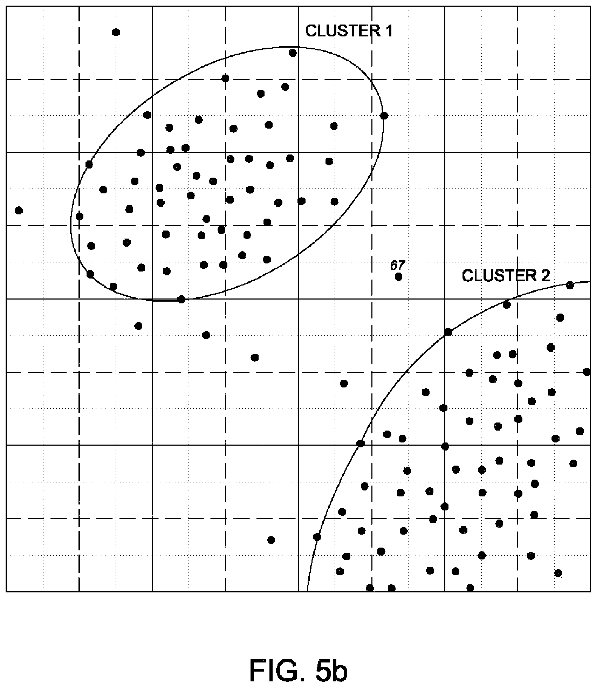

Figs. 5a-b disclose a bi-dimensional example of the clustering method of the invention.

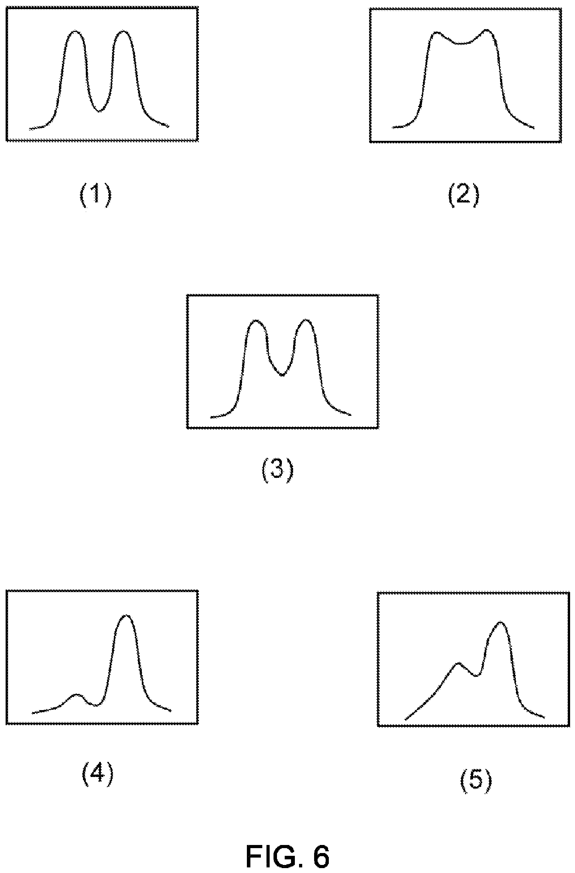

Fig. 6 shows some examples of one-dimensional distributions of events that illustrate the problem of deciding when a group of events with more than one density maximum must be considered one or several clusters. The horizontal coordinate of the diagrams is the single coordinate of the event space and the vertical one is the density of the event distribution. The clusters are represented in one dimension for illustrative purposes; in most applications of the invention, the number of dimensions will be in fact much greater than 3.

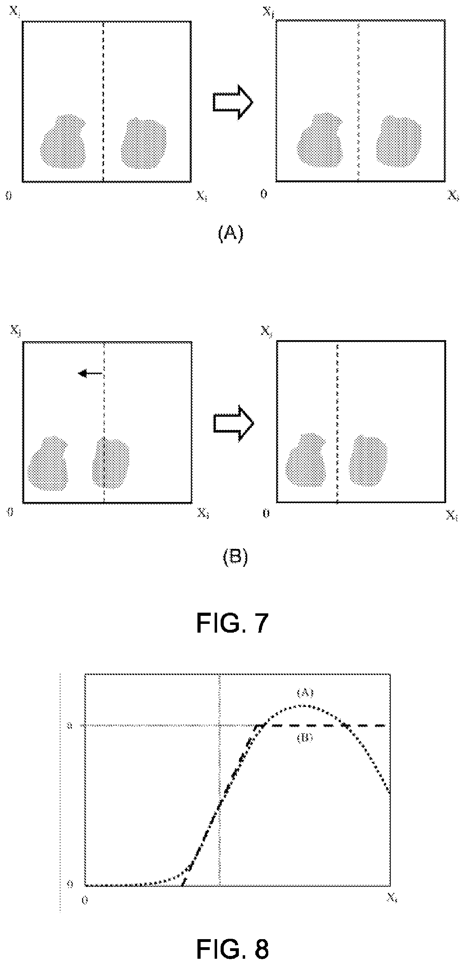

Fig. 7 represents in two dimensions the problem of defining a one-dimensional separation to classify clusters depending on the values of their coordinates, or to classify isolated events depending on the real location on the axes of the main clusters corresponding to the populations that must be separated. It represents two subsets of events with "low" values for coordinate Xⱼ and different values for coordinate Xᵢ, indicating two different populations. The main clusters of the respective populations are first identified according to their respective positions on the Xᵢ axis and, once this is done, the location of the separator line is corrected if necessary (view B), so that it can be used subsequently to classify small clusters and isolated events.
Fig. 8 represents typical one-dimensional functions used by basic default methods of the analysis module to evaluate the degree to which some cluster or event appears to belong to a certain population. In a strict Bayesian approach (A), the curve should represent in principle the distribution along the horizontal coordinate of the probability (or frequency) that the centre or centroid of this cluster has the corresponding value for the coordinate Xᵢ represented in the horizontal axis. Curves like (A) are in principle obtained by precise calculation of probabilities or by measurement of frequencies in a suitable set of samples. Simplified functions like the one represented by discontinued straight lines (B) result in much faster calculations and their precision suffices in most cases. In most real applications, in addition to these basic functions, the identification system uses, for specific populations and/or certain dimensions, other more sophisticated functions, multiparametric and completed if necessary by appropriate custom rules.

### DETAILED DESCRIPTION OF PREFERRED EMBODIMENTS

The aim of the invention consists in classifying into appropriate categories the elements of some group or sample for each of which an appropriate device or system equipped with suitable detectors or measuring instruments provides a set of n measures reflected in real numbers. In most applications, each of these information elements corresponds to a physical event such as the passage of a microscopic object extracted from the analysed sample through a region of the device equipped with detectors. For this reason, these information elements will be typically called here "events". The n numbers associated to each event will be called "parameters", and the process by which the said device or system extracts elements from a sample and feeds them successively through a sensitive region will be called here "acquisition", and therefore the device or system performing it will be called "acquisition device" or "acquisition system".

For each event, the said device provides a set of n numbers that typically correspond to the respective outputs of n different detectors sensitive to different specific physical phenomena caused by the passage of the microscopic object through a sensitive region of the device. Therefore, in principle, each of the n numbers associated with each event represents a different property of the object associated with this event, but the i-th number associated with any event always represents the same characteristic for all the events. Since each information element (event) is associated to a set of n numbers, it can be modelled as a point in an n-dimensional space where its coordinates are the n numbers measured by the acquisition device. In this model, each dimension of this multidimensional space corresponds to a parameter in the sense defined above.

The invention is a modular analytical system comprising one or more of the modules described hereafter: (A) data entry interface, (B) clustering module, (C) identification module, (D) acquisition control link. It is designed so that it is possible and easy to combine modules provided by the inventor with others developed by third parties. A schematic representation this system is given in Fig. 1. A typical application of this invention may be, for example, the automatic or assisted identification and counting of cells in a biological sample, such as a blood sample, the acquisition device being a flow cytometer or similar apparatus.

### A: Data entry interface.

Depending on the application, the data may be sent in real time by the acquisition system to the analytical system, or stored on a computer storage device for later analysis by this system. In the first case, the data may be fed directly to the analytical system through a software interface if the control software of the acquisition device and the analytical system are installed in the same computer, or through a communications link if they are in separate computers. In the second case, if the analysis is not performed in real time during the acquisition, it is irrelevant whether the two software systems are located in the same computer or not.

### B. Clustering module

A very useful function of the invention is the classification of the events into groups inside which the average or overall difference between the parameters of the events are significantly lower than in the whole dataset.

Including a clustering step in the analysis system implies important advantages in comparison with methods attempting the identification of each event individually regardless of the classification of other events:
- The fact that two events belong to the same cluster is a strong indication that they are of the same type, and this information may be wasted if one attempts to identify each event independently of the others.
- The analysis process is much faster if performed on clusters than on events, because there are far fewer clusters than events.
In the negative side, the use of clustering may have the following disadvantages:
- For numbers n of dimensions greater than 2 or 3, clustering may require prohibitive calculation times if sub-optimal algorithms are used.
- Clustering algorithms inevitably involve a significant number of adjustable parameters whose configuration may not be obvious for inexperienced technicians but is often critical to obtain good results.

Both potentially negative aspects are addressed by this invention in ways that produce satisfactory results in practice.

It is also interesting to note that clustering is implicit in the manual identification process performed currently with the help of graphical representations of the events and described under [B3. Manual Modifications]. Essentially, this method consists in projecting the event space in one- or two-dimensional views as the one represented in Fig. 2, where it is immediate to distinguish three main clusters of events, and defining individually each visible population by surrounding it with a closed curve such as the ellipse of the figure. This manual process is currently the preferred technique of flow cytometrists for problems of medium and high complexity, because of the lack of automated systems sufficiently fast and convenient.

The invention includes its own preferred clustering method, but can work with other clustering methods provided they are efficient enough and use the same interface and rules as those provided with the invention.

The preferred clustering process is described below. For convenience, we can distinguish two basic steps in this process: (1) Preparation of data structures and (2) Construction of clusters

### B1. Preparation of data structures.

In order to explain the mechanism of the preferred clustering algorithm, it may be helpful to begin with a brief description of a couple of non-optimal but simple approaches to the problem. First, since a cluster is roughly a region where the density of points is greater than elsewhere, it is clear that the distances from each point to its nearest neighbours and the local density of points in the different regions of the event space are fundamental concepts for this calculation. In order to search for the nearest neighbours of each event, a typical "brute force" approach could consist in calculating, for each event, the distance separating it from all the other events of the set. The efficiency of such approach is extremely poor, because it requires around E² / 2 calculations for E events.

An improved approach is proposed in US patents 6,944,338 (Lock, M.D.; Dalal, S.S., Ghulovsky, I.) and 6.014.904 (Lock, M.D.). These are based on the division of the event space by means of a grid, and the closest neighbours of each event are searched for only in the grid cells or elements closest to the one to which the event belongs. By choosing empirically the most appropriate dimension (or division ratio) of the grid, it is possible to achieve a better performance than with the above "brute force" approach. The method of the first patent is applied to two-dimensional projections and corresponds basically to the (B) view of Fig. 3. This figure provides several simplified views of Fig. 2, the fist of which (A) being the same as Fig. 2 with its ellipse drawn by a cytometrist to define one population.. The second patent is applied to a one-dimensional space. The use of a grid is also shown by Nuannuan Zong ET AL in the article "A New Clustering Algorithm of Large Datasets with O(N) Computational Complexity".

In practice, this approach provides reasonable calculation times only if the number n of dimensions is not greater than 2 or at most 3. For greater numbers of dimensions, the method becomes inapplicable because:
- In spaces with many dimensions, it is nearly impossible to choose an adequate size of grid. In grids "coarse" enough to include at least a few events per cell on populated regions, there are far too many events per grid element, typically thousands. By contrast, with "fine" grids, most events will be alone in their own grid element and the neighbouring elements will contain no event at all. A complete enough search of the neighbouring grid cells would be prohibitive because there are far too many: their number is an exponential function of the number of dimensions. For example, in 2-dimensional grids, where the cells are squares, each one is in direct contact with 8 others: 4 by the sides and 4 by the corners. In six dimensions, each cell of the grid is in direct contact with 3⁶ - 1 = 728 others, and this number includes only the cells in direct contact, where there is probably no event at all in most cases.
- For the same reason, calculations of event density as a number of events per unit of hypervolume are practically impossible.
- The total number of cells of a typical grid grows exponentially with the number n of dimensions, making it impossible to store information for all cells.

To overcome these problems, this invention does not use a single grid, but a set of grids of different sizes, so that for each event its neighbours are searched for only in the grid of the most appropriate size. When loading the input data, the algorithm builds several grids of decreasing sizes and it associates each event with the grid element to which it belongs in each of the defined grids. In the (C) view of Fig 3, we have represented for illustrative purposes two grids of different sizes on the same two-dimensional space. It should be clear that this representation is given here exclusively for explanatory purposes. In any application of the present invention to real problems, the space typically has many more dimensions and there are several more levels of grids, which are treated differently than in any published algorithm.

The elements into which a one-dimensional grid divides a one-dimensional event space are line segments. Plane grids divide two-dimensional event spaces into squares, three-dimensional grids divide the space into cubes, and, more generally, n-dimensional grids divide n-dimensional spaces into hypercubes, which is the precise technical term that will be used here most often to designate n-dimensional grid elements. For reasons of clarity, Figs. 4a-d disclose the method of the invention when applied to a bi-dimensional space, that is, when only two parameters are acquired for each event. Nevertheless, it is clear that the method is most advantageous when applied to the classification of events characterised by a large number of parameters, since an important advantage with respect to other known methods is the improved calculation time. The preferred preparation algorithm works as follows:
Fig. 4a shows a set of events in a bi-dimensional field. First of all, the available global information of the dataset (total number of events and dimensions, ranges, etc.) is read and used to adjust, if necessary for the given application, the values of variable parameters (number and size of grids, clustering thresholds, etc.) through predefined rules established by experience or other means. The result is shown in Fig. 4b, in which three grids of different sizes have been added to the bi-dimensional space.

Next, the events of the dataset are read one by one and, when each event is loaded, the software calculates to which hypercube it belongs in each of the n-dimensional grids, and it associates the event with each of these hypercubes, updating the total number of events per hypercube. In fact, in practice, the software does not update the coarsest levels of grids for each event: it is more efficient to build first the lowest (finest) layers of grids ant then to build the coarser ones by adding lower-level hypercubes instead of individual events. The program stores information only for the hypercubes that contain events, so that the possible number of hypercubes in memory is at most equal to the number of events multiplied by the number of layers of grids, which is far lower than the potential number of hypercubes of all the grids. For that purpose, the program can use any efficient "sparse array" technique, for example based on keys stored in hash tables or indexes.

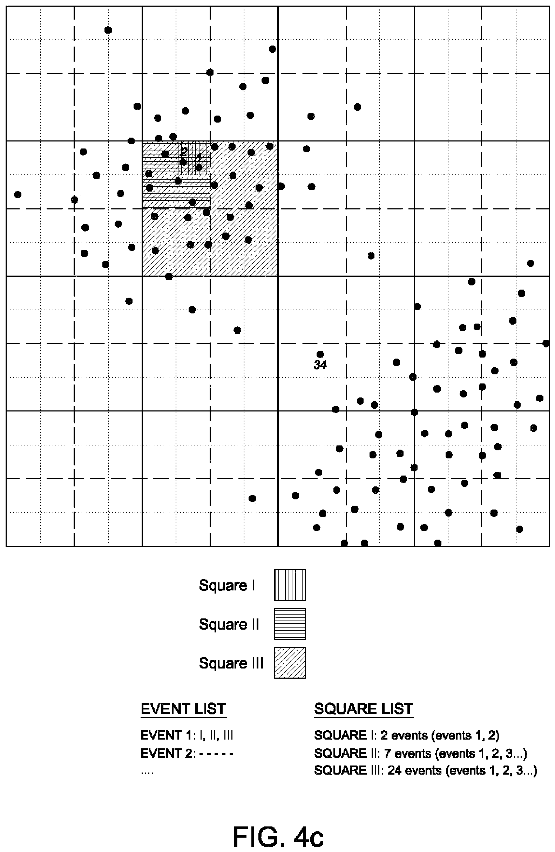

In the bi-dimensional example shown in Fig. 4c, Event 1 belongs to Squares I, II and III. At the end of this process, the software has created two lists, namely, a list of events containing which squares they belong to, and a list of squares containing the number of events in each square and a list of these events, as also shown in Fig. 4c.

After all the grids are built, the software processes again sequentially the events and for each one (which we call the reference event) it finds among the hypercubes containing this event the less populated one that contains at least a minimum number k of events. This number must be sufficient to find among these events enough possible links to other events of a possible cluster, but if it is too great the hypercube will contain many events located too far from the reference one to be considered among its "closest" neighbours", therefore wasting much time in useless calculations of distances. Thus, each event is assigned a different size depending on how isolated the event is. This has the advantage of saving making only the minimum number of operations required for each event, thus saving calculation time. In the bi-dimensional example shown in the figures, supposing k=5, grid size corresponding to Square II is selected for Event 1. On the other hand, grid size for Event 34 must be greater, since it takes a larger square to contain k=5 events.

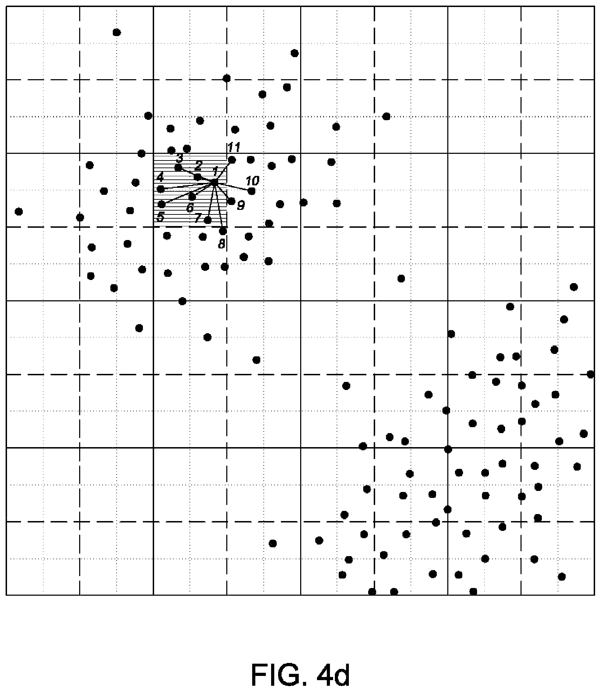

When the appropriate grid level is selected, the program looks for the closest neighbours of the reference event inside its hypercube of the selected grid level and, optionally, in one or a few of the contiguous hypercubes. By this method, the software efficiently associates to each event a list of its p closest neighbours, p being a number predefined in the software, and calculates an associated local density, either based on the number of events of the selected hypercube, or on the average distances to the p closest neighbours. In the disclosed bi-dimensional example, supposing p=10, the software searches for the 10 closest events to Event 1 in Square I and in the contiguous squares of that size. Fig. 4d shows the selected 10 events. Then, the local density corresponding to Event 1 is calculated depending, in this example, on the average distance to these 10 events.

The program also builds a structure through which the events of the space can be accessed efficiently by descending order of local density, and it records group values for each parameter such as mean, maximum and minimum values, percentiles such as 5% and 95%, and other relevant information that can later be used to scale or adjust the expected values of the positions of the main populations that should be identified in the sample.

The number of grids, their separation, the sizes of the coarsest and finest one, the minimum number k of events of the selected hypercubes, and the minimum number p of neighbours taken into account for density evaluations and cluster building are configured empirically so as to provide the lowest calculation times compatible with a suitable construction of clusters plus a security margin, for the applications that will be treated with the invention. It is also almost mandatory to configure a maximal distance d beyond which no neighbour is taken into account for the reference event, even if there is no other available neighbour. In sophisticated applications, it is possible to define one value of d for each dimension of the event space or special values for specific regions of this space. Typically, a wrong choice of the number or sizes of the grids will result only in poor performance, but the algorithm will work as long as there is at least a "coarse" enough grid. However, if the minimum numbers k of events per hypercube, p of closest neighbours stored per event, or d of maximal separation between neighbouring events of a cluster are too small, the algorithm will perform no suitable clustering at all. On the other hand, the ratios between the sizes of consecutive grids need not necessarily be integers, nor uniform, although in these cases the calculation of densities as a number of events per unit of hypervolume may be complicated. It is necessary, however, that the grids are explored by the program by order of size, either ascending or descending. The distance typically used by the program for all calculations is the maximum of the absolute values of the differences between the respective coordinates of the two points under comparison, although in some parts of the invented system the use of other distances, for example Euclidean, may be considered.

In addition to the construction of grids and the abovementioned additional calculations, the preparation step may perform some mathematical transformations on some of the coordinates if with the raw values of these fed by the acquisition device the average geometric characteristics of the population clusters are not sufficiently homogeneous between the different regions of the event space. For example, some coordinates may be best viewed in logarithmic scale, and the logarithmic transformation may or may not have been applied inside the acquisition device. In all such cases, the preparation method described here allows, depending on the applications, either to perform a mathematical transformation on some coordinates just after loading them and before any treatment, to perform some of such transformations for some purposes and use the original data for others, or to configure the parameters controlling the search of the closest neighbours of each event with different values depending on the region of the event space where they are located.

### B2. Construction of clusters

To build the clusters, the program processes the events by descending order of local density and, for each one (the reference event), determines whether there is among its p closest neighbours any event with a greater or equal local density. If there is none, the program starts building a new cluster with the reference event as its first one. If there are neighbours with equal or greater densities, the program identifies the cluster containing the event with greatest local density among the closest ones, or the closest event with greater local density than the reference one, and associates the reference event to this cluster. If the initially selected neighbour is associated to no cluster, the program explores the next one, and so on. It is very improbable that none of the neighbours with greater local density is associated with a cluster, because since they are of greater density they should have already been processed and therefore associated with a cluster, but it is not impossible that none of these events is already associated with a cluster, especially if the adjustable numbers k and p explained above have not been properly configured. If no neighbour with higher or similar density is already associated to a cluster, the algorithm may be configured so as the reference event is considered "isolated", that is, not associated to any cluster, or starts its own cluster as if it had been located in a density maximum.

Figs. 5a-b represent the abovementioned clustering process in the bi-dimensional example of Figs. 4a-d. As explained above, the process implies an exploration of the global list of events by descending order of local density. Let us suppose that at a given moment this exploration arrives to Event 1 of Figs 4c-d. Then, a search is performed to determine if there is an event among the 10 closest events with a higher local density. Since there isn't, Event 1 is the first event of a new cluster, named here Cluster 1. Next, Event 2 is selected. Is there an event among its closest 10 events with a higher local density? Yes, the software finds Event 1, and accordingly it assigns Event 2 to Cluster 1. As this process continues, a different cluster will originate in each local density maximum event.

Sooner or later, the program will find some event at the frontier or "valley" between two clusters, as is the case of Event 12 in Fig. 5a. In these cases, the program must know whether the two adjacent clusters should be merged into one or be left separated, depending on the depth of their separation. This aspect is a further one that must be configured empirically for each application of the invention. For example, in the bi-dimensional example of Fig. 5a, a high local density of Event 12 indicates that Cluster 1 and Cluster 2 must be merged. As the process continues, the same thing occurs for Event 67. Nevertheless, in this case, due to the low local density of Event 67, the program decides that the two clusters must remain separated, and further, it decides that Event 67 must not be taken into account.

The same thing is represented for a one-dimensional example in Fig. 6. In view (1) of Fig. 6 it seems clear that there are two clusters, in view (2) there is one, but in view (3) things are not so obvious. Furthermore, most often it will not suffice to give a value to a single number, because cases like (4) or (5) must be taken into account. In strict terms of statistical mathematics, it is clear that all the views of Fig. 6 reflect the presence of two different "bell-shaped" distributions of events indicating the presence of at least two sub-types of these, but this distinction may not necessarily be significant in practice in all applications. In addition, in complex applications, it may be useful or mandatory to vary the rules determining whether adjacent clusters must be merged or not, depending on which region of the event space they are located in, or on some other combined characteristics of these clusters and the sample under analysis.

Finally, it is usually useful to eliminate clusters under a certain number of events and reclassify their events as isolated.

If adequately configured, the method described here in combination with the data structures prepared in the previous step is very fast even for problems with high numbers of parameters (dimensions) but there is often a price to pay for this speed: the resulting clusters are usually incomplete, containing often no more than 90% of the events that really form the cluster under objective criteria. Apparently, this problem results at least from two facts: the list of closest neighbours built for each event is not always complete, and the estimates of local density around each event cannot be irreproachably regular because of the inevitable statistical irregularities. It is possible to increase the percentage of events per cluster given by the program to virtually 100% by adjusting appropriately the configurable values described before, but the price to pay in terms of speed is too high. Just increasing this percentage from about 90% to 99% can increase many times the processing speed. Since for identification purposes cluster representations with only about 90% of the events of the real cluster, and even much less, are perfectly suitable, it does not seem appropriate to sacrifice speed to obtain more complete clusters for the initial phases of the analysis. Once the main clusters have been identified, it is possible to recover all the isolated events of all the populations by different means:
- By using the identified clusters to adjust the positions of the basic one-dimensional separations (gatings) between populations, which will be subsequently used to classify the remaining isolated events, as explained in [C2 Identification of small groups and isolated events] and illustrated in Fig. 7. Since in most cases this step will be performed anyway, it represents no performance loss in terms of clustering performance.
- By using two-dimensional grid projections of the clusters to associate to each cluster all the isolated events that fall into all the projections of the cluster on a complete set of two-dimensional views of the n-dimensional event space. Since this technique will normally be used if necessary to classify isolated events when the preceding one, which essentially defines a hypercube, is not precise enough, in principle this technique does not represent any performance loss in terms of clustering performance.
- The n-dimensional clustering method can be used in combination with 2-dimensional clustering in some views, for some applications, in which case the problem of incomplete clusters is solved at least partially without further performance loss.
- If necessary, a second pass, or more, can be performed to try again to associate the remaining isolated events to clusters. Since most events will be ignored as being already associated to clusters, these supplementary passes should be very fast, most especially if they are done with the help of an index or similar structure retrieving only the isolated events remaining in the sample.

The speed of the clustering algorithm described above can be further improved by limiting the construction of clusters to some proportion of the events, for example 10% or 5%, which would multiply the speed respectively by 10 or 20. This approach may be especially useful in problems involving great numbers of events, such as diagnostic tests of minimal residual disease performed by flow cytometry, where it is necessary to acquire millions of events to be reasonably sure of acquiring also at least a few dozen events of some populations whose presence is critical for the diagnostic and whose concentration in the sample is very low. By using only a small proportion of the total events to build the clusters, it is possible to identify all the dense populations whose positions determine the expected location of the small population, and therefore define precisely the regions of the event space where an exhaustive search including all the individual events of these regions is likely to find the said small population if it is actually present in the sample.

The basic clustering method described here can be completed, if necessary or useful depending on the application, by diverse rules reflecting particular situations, either based only on the data provided by the cluster construction procedure or on feedback from the identification module described below.

### C. Identification module

In n-dimensional classification problems, each of the populations of interest is identified by a set of conditions applied to the coordinates of the events. An event is considered to belong to a certain population if its coordinates fulfil all the conditions associated to this population. If the problem has been correctly modelled, these sets of conditions should be mutually exclusive, because it should not be possible for an event to belong to several populations simultaneously, unless one is a subpopulation of the other, a situation that will not be considered here because it suffices to identify the lowest-level subpopulations and those of higher levels can be deduced immediately.

Most of the conditions that it suffices to apply in practice are of the simplest kind: the value of some coordinates are higher or lower than certain limits. In fact, in biological problems, most often the condition will be that the value of the coordinate should just be "high" or "low". However, this does not mean that the problem can be solved by identifying two clusters per coordinate and assigning each to a different population. There may be more than one cluster per population, or some population may be absent. For this reason, in practice it will always be necessary to define a "default" average value for each separation, usually obtained as the average measured for a significant number of real samples analysed previously by manual graphical means.

Fig. 7 represents two clusters with "low" values of the Xⱼ coordinate and different values of the Xᵢ coordinate. It is understood that, in a manual analysis process, such representation would have required to previously identify and hide other populations that could appear superposed to the above in this representation, but a multidimensional analysis program can operate directly on each coordinate without need of previously hiding other populations projecting on the same region of the two-dimensional graph. In our example, the two populations are identified according to their respective positions on the Xᵢ axis in relation to the standard separation line, which is vertical for the horizontal axis. In view A, the clusters are found approximately at their normal expected positions and therefore the separation is left at its default position. It will be used later to classify small clusters and events belonging to no cluster. In view B, because of some irregularity in the preparation of samples or in the settings of the acquisition device, both clusters occupy regions with values of the Xᵢ coordinate lower than expected. The program still finds two clusters, and stills considers them to belong to different populations because the Xᵢ coordinates of the rightmost one are too high to classify this cluster as a second cluster of the "low Xᵢ" population, but the program must correct the position of the frontier, which will be used later to separate small clusters and isolated events.

This example reflects one of the simplest situations and is provided here for explanation purposes. In practice, many applications require, for some populations and some coordinates, the adjustment of several separating lines, horizontal, vertical or oblique, in one or more two-dimensional representations, and sometimes complemented by additional specific rules.

The preferred methods used by the invention to perform the identification of the main clusters are explained under [C1. Identification of main clusters], and those subsequently applied to small clusters and isolated events are explained in [C2. Identification of small groups and isolated events].

### C1. Identification of main clusters

The preferred process of classification of the main clusters detected in the previous clustering step is described below. It is normally restricted to clusters over a certain size, but it is sufficiently flexible to be used also, depending on the applications, for small clusters or isolated events, or for isolated events only, either if there has been a previous clustering step or if there has been none.

The program determines the best classification for each cluster by calculating for it a certain coefficient for each possible population, on the basis of the characteristics of this cluster and possibly of other ones of the sample. These characteristics may include the location, dimensions, density, shape, or whatever other characteristic that can be calculated on the basis of the properties of the clusters or events of the sample. Shapes will normally be evaluated on two-dimensional projections, because, on the one hand, if is nearly impossible for the human mind to conceive shape patterns in more than 3 dimensions, and very difficult in 3, and, on the other hand, with the computers of present times, shape analysis in several dimensions would require prohibitive calculation times.

The calculated coefficient is considered to reflect the "probability", "likeliness" or "presumption" that the said cluster belongs to the population for which the coefficient is calculated. As for the exact nature of this coefficient, the program is totally flexible and allows the implementation of practically any known model of the domains of standard mathematics or artificial intelligence. For example:
- A strict Bayesian approach, in which the coefficient is the probability that the cluster belongs to the population, calculated on the basis of an initial assignment of equal probabilities to all the possible populations.
- A neural network, in which the coefficient is more empirical and reflects the firing strength, in a continuous range or a set of discrete values, of the neuron reflecting the likeliness of the cluster belonging to the population associated to the neuron.
- A combination of a neural network with classical computer functions, when some calculations can be performed more efficiently by programming them with standard computer programming techniques than by modelling them in layers of software neurons.
- A system structured in the form of expert system rules.
- Practically any coherent combination of the above.

The system presents the further advantage of allowing an easy integration of modules developed by third parties, as long as they are capable of reading the values calculated and stored by previous steps for events and clusters, and their result is a "likeliness" or a "likeliness correction" coefficient for which the developer provides enough explanations and scaling instructions to allow the integration of the module into the system.

One of the characteristics used most frequently to determine the population to which a group of events belongs is the location of its projection on the coordinate axes. The simplest distinctions are between "low" and "high" values, or between "low", "medium", and "high" values when three different populations can be resolved by the values of a single coordinate. Therefore, it is very frequent that the likeliness coefficients are calculated, at least in part, as some additive or multiplicative combination of several other coefficients that reflect the respective positions of the projections of the event group on a certain number of axes. Each of these partial one-dimensional likeliness coefficients is normally calculated as a one-variable function of its associated coordinate, and each of these functions can typically be represented by a curve similar to those shown in Fig. 8. This figure shows two different possibilities for the function used to calculate the individual likeliness coefficient corresponding for the coordinate Xᵢ to a population characterized as having a "high" value for this coordinate. The dotted curve (A) corresponds to a Bayesian approach and should represent the density of the probability that the centre of the said population has the value Xᵢ for the i-th coordinate. In principle, this distribution should be obtained by recording the frequencies of each possible position of the population in a sufficient number of real samples analysed by conventional means. By contrast, the likeliness function defined by the (B) "curve" composed of three straight segments is an artificial variant that most often provides acceptable results with shorter calculation times than the (A) function. Normal implementations of the identification module of the invention should in principle provide this kind of basic one-dimensional partial likeliness functions, so that the end-user can configure full solutions for simple problems by just defining a set of such functions without need of custom programming. For some applications, it may be useful to complete these basic functions with more sophisticated ones, also predefined, that the user can add to the basic ones to configure full analytical systems without programming. For example, a good number of applications of flow cytometry can be configured by adding to a set of the above one-dimensional functions a specialized module capable of recognizing granulocytes, monocytes and lymphocytes in a two-dimensional front scatter / side scatter (FSC / SSC) representation like that of Fig. 2. One such module provided with this invention would be a generalization to two dimensions, and to two or more separator lines of configurable orientations, of the simple one-dimensional separation problem represented in Fig. 7, complemented by optional additional rules. It may be worth noting that, in comparison to other possible existing treatments of this problem, the one provided with this invention should normally work in n dimensions and use all the available coordinates, in addition to FSC and SSC, to identify the clusters. In other words, in our treatment the cluster that can be seen at the bottom of Fig. 2 would be treated in fact as a superposition of the projections on this plane of the different n-dimensional clusters corresponding to the possible types of lymphocytes, which results in an identification procedure far more reliable than any attempt to identify the global lymphocyte cluster on the sole basis of the representation of Fig. 2, especially when this region is cluttered with debris as is often the case.

In the standard variant of the invention, when the program has calculated for a given cluster its likeliness coefficients for all the populations according to the configured model, it assigns the cluster to the population for which the coefficient is higher. Once this operation has been performed for all clusters above a certain size (or for all clusters or events depending on the configuration), there is the possibility of ending this phase and initiate the next one, or of iterating the step of coefficient calculation and population assignment. Obviously, this can be useful only if certain coefficients may depend on which populations have been assigned to certain clusters. In case the program is configured to allow iteration, for reasons of stability it is strongly recommended to base the calculations of the coefficients of step i only on the results of step i-1 and not on any of those of the ongoing step i. It is also strongly recommended to configure a maximal number of steps with a reasonable value, so that the program stops unconditionally after at most this number of steps, avoiding possible endless loops.

Since step 2, it is possible to configure the module so as to allow only assignment changes increasing a global likeliness coefficient calculated on the basis of all the individual ones of each population. In one variant, the assignment change can occur only if the likeliness coefficient of the group whose classification changes increases. In another variant, the assignment change is allowed even if this likeliness coefficient decreases, as long as the global one increases. Both variants may be time-consuming, because all the possible consequences of each change must be evaluated. Practice can determine whether such refinements are appropriate for a given application.

Typically, the program can be configured to stop iterating when one or more of the following conditions occur:
- In the last step, there has been no change in the assignment of type of population to the candidate clusters or events.
- The unconditional maximum number of steps is reached.
- Whatever other custom rule.

The results of the identification algorithm can be completed by deducing a global likeliness coefficient from those associated to each population. The exact calculations depend on the configured model (Bayesian, neuronal, etc.) and, essentially, a value of the global coefficient near the maximum means that in the processed sample all the populations are clearly recognizable, whereas low values indicate that a significant number of characteristics of the analysed sample do not correspond to any expected or recognizable combination of the populations identifiable by the system. This may occur, for example, if the sample is analyzed with a program configured for samples of another type, or, in the analysis of biological samples, if there are pathological or deviant populations whose characteristics have not been configured in the system, or if the sample contains great quantities of debris.

### C2. Identification of small groups and isolated events

Once the main clusters of the dataset have been identified, it is necessary to classify small clusters and isolated events. This can be done by several different methods, as described below, and it is possible to apply different methods for the different coordinates identifying each population of interest. It must be understood that the classification of events or small groups requires defining for each possible type of population a set of rules involving one or more coordinates, so that an event is classified into a population if and only if it fulfils all the conditions established for this population for each of its coordinates.
- For the simplest case, that is the separation of two populations in one dimension, most often it suffices to define a single threshold value dividing the total range of the coordinate into two regions, each corresponding to a population. The threshold value pre-configured in the program and applicable to the average sample is adjusted automatically depending on the positions of the main clusters identified by the program for each of the populations, as illustrated in Fig. 7 (B).
- Sometimes it may be necessary to separate populations in two-dimensional representations by means of a set of straight lines, horizontal, vertical or oblique. In this case also, the positions of these lines are adjusted on the basis of the location of the main clusters identified in the sample for each reference population, as in Fig. 7 (B) but in any orientation.
- A common problem of these two options is that they may include in the populations some events that are located very far from the main population cluster and therefore may have nothing to do with this population. In most cases, there will be very few such events and their presence will be irrelevant. However, in other cases, the numbers of such events may be significant and it might be necessary to include rules eliminating them from the populations of interest. For this purpose, in general it will suffice to project the main clusters already identified for each population on a complete set of two-dimensional grids, and include an event in the corresponding population if it projects in all these projections into a grid element in which at least one event of the main population clusters projects also.

There are other possible techniques, more powerful and precise but seldom necessary:
- Complementary two-dimensional clustering of some projections.
- Application of specific rules for some regions of the event space or coordinate ranges.

### C3. Manual modifications

The invention may optionally include a manual analysis module so that the user can manually override the results of the automatic analysis procedure. The method is already well-known in the art and essentially consists in identifying each population by surrounding its group of points in several complementary two-dimensional projections of the event space, as illustrated in Fig. 2, where it is possible to distinguish three clusters corresponding to different populations of blood cells, and the one corresponding to monocytes has been surrounded by the user with an ellipse so as to identify it to the computer. Since this technology is far from new, this patent application does not apply to manual analysis modules by themselves, unless they are complemented by some innovative feature of this invention, as could be the inclusion of data preparation steps involving sets of more than one grid in geometric representations, so as to accelerate the treatment of datasets with great numbers of events by operating at hypercube level instead of event by event.

### D. Acquisition control link

This is an optional module allowing exchanges of information in real time between the acquisition device and the identification module.

This option requires a real-time bi-directional communication channel between the acquisition device and the identification module of the analytical system, which may consist, for example, in direct subprogram calls or an internal or external TCP/IP communication. Normally, this link will be the same through which the acquisition device feeds data to the clustering module, but it must necessarily be bi-directional and work in real time.

The system works as follows: during the acquisition of a sample, the acquisition device sends information in real time to the analysis module about the parameters of each acquired event. In real time, the analysis module analyzes groups of events and looks for patterns that it can identify. If it determines that these patterns are inadequate because some settings of the acquisition device are maladjusted, it can send in real time a request to the acquisition program to modify some of these settings and continue the acquisition. After several such cycles, when the analysis module considers that it has received enough well-acquired events to identify all the populations relevant to the kind of analysis being performed, it instructs the acquisition device to stop the acquisition and it provides automatically the results of the analysis.

The analysis of input data for purposes of adjustment of the settings of the acquisition device is performed by functions that may operate independently of one another or not, and analyse either aspects of the said data related to the characteristics of the identified populations, or other ones independent of these, or both. Similarly, the modules of this kind included in the system and provided by the inventor may be completed by others provided by third parties.

For example, in flow cytometry, such system should be capable of identifying and correcting in real time, among others, the following acquisition problems:
- Incorrect photo-multiplier voltages identified by a general tendency of all populations to occupy in the corresponding dimension positions significantly lower or higher than expected and most often also by accumulations of events on the axes, planes or hyperplanes representing minimal and maximal values in the system of coordinates.
- Incorrect compensation values identified by certain types of unexpected positions of populations and / or typical elongated shapes of clusters in two-dimensional representations. Compensation is a technique by which a possible influence of some property of the events on more than one detector can be corrected by subtracting a proportion of the measure of this property in its main detector from the measures of the other detectors on which it "spills" in an unwanted manner.
- Presence of dense populations of events irrelevant for diagnostic purposes, such as debris, or platelets in analyses of white blood cells. The analysis module can identify these populations, but this requires significant calculation time, so it is more efficient to eliminate them directly in the acquisition device when it is possible to do so by just ignoring all the events for which a certain coordinate has a value below or above some adjustable threshold. Furthermore, by doing so, the files where the acquisition device stores event information are nor cluttered with useless data, avoiding wasting disk space.

Though the feedback module described here can be used with the clustering and identification procedures described above and these are already very fast, the overall performance can be further improved for real-time analysis by taking into account only a fraction of the acquired events. This will be usually be acceptable for purposes of initial acquisition control, though it may not be so for the subsequent complete analysis once the settings of the acquisition device have been correctly adjusted, because some applications require acquiring great numbers of events, typically several million, so as to be able to detect populations that are present only in proportions of a few events per million of total events. This is the case, for example, of minimal residual disease analysis in flow cytometry.

The automated acquisiton control provides great advantages over current manual procedures, apart from the advantages of automatic analysis by itself:
- It allows the complete procedure of acquiring and analysing a sample to be performed automatically, without any intervention of the operator other than feeding the sample and selecting on a pre-configured list an item identifying the kind of sample and the kind of analysis to be performed.
- It can spare the end-user the task of calibrating the acquisition machine daily or weekly, the required revisions being far less frequent or even limited to unexpected failures.
- It allows the integration into any cytometer of automatic analysis software modules developed independently either by the cytometer's manufacturer or by third parties, and designed specifically for a specific kind of sample and a specific reagent kit. Similarly, it allows manufacturers of reagents to develop automatic acquisition + analysis software able to work with minimal changes in cytometers of different models and from different manufacturers.

The dialogue between the acquisition program and the analysis module must be standardized and include at least the following instructions:
Messages from the acquisition program to the analysis module:
   - Informs that acquisition has started.
   - For each event acquired, provides information about all its parameters.
   - Returns the value of an acquisition setting in response to a request of the analysis module.
   - Returns a list of all possible acquisition settings, in response to a request of the analysis module.
   - Returns information about the acquisition device, in response to a request of the analysis module.

Messages from the analysis module to the acquisition program:
- Requests the current value of some acquisition setting.
- Requests a modification of the value of some acquisition setting.
- Requests the complete list of all modifiable acquisition settings.
- Requests information about the acquisition device.
- Informs that the number of acquired events is sufficient for the analysis and acquisition can stop.

## Claims

1. A method for the automatic classification of events acquired by a flow cytometer, wherein each event is **characterized by** a set of n parameters, the method comprising the steps of calculating the local density corresponding to each event, finding clusters of events in the n-dimensional parameter space and identifying each cluster with a population, **characterized in that** the step of calculating the local density corresponding to each event comprises the following steps:
a) creating a set of n-dimensional grids of different hypercube sizes in the n-dimensional parameter space;
b) selecting one hypercube size from said set of n-dimensional grids for each event, the hypercube size being the size of the less populated hypercube containing said event and a minimum number k of events; and
c) associating to each event a list of its p closest neighbours located inside the hypercube assigned to each event and within a maximum distance d from said event, and
d) calculating the local density in the neighbourhood of each event, on the basis of the average distances to the p closest neighbours of said event.

2. The method for the automatic classification of events acquired by a flow cytometer according to claim 1, wherein step c) further comprises searching for the p closest neighbours in one or a few of the hypercubes contiguous to the hypercube assigned to the event.

3. The method for the automatic classification of events acquired by a flow cytometer according to any of claims 1-2, which further comprises the step of:
e) sorting the events according to their local densities in order to perform the step of finding clusters of events in descending order of local density.

4. The method for the automatic classification of events acquired by a flow cytometer according to any of claims 1-3, wherein, subsequent to a step of building clusters of events, the method further comprises the step of:
f) correcting calibration parameters of the flow cytometer on the basis of mislocation of clusters with respect to expectable populations.

5. The method according to claim 4, wherein the calibration parameters comprise photo-multiplier voltages and compensation values.

6. System for automatically classifying events acquired by a flow cytometer, wherein each event is **characterized by** a set of n parameters, the system comprising:
a flow cytometer, which acquires a set of n parameters corresponding to the physical properties of the events;
a clustering module (B), connected to the flow cytometer by means of an interface module (A), configured to calculate the local density corresponding to each event according to steps a) to d) of claim 1, and optionally according to claim 2, and configured to find clusters among the event data received from the flow cytometer; and
an identification module (C), connected to the clustering module, which identifies clusters with populations,
the system further comprising a connection (D) between the identification module (C) and the interface module (A) for correcting flow cytometer calibration parameters on the basis of mislocation of clusters with respect to expectable populations.

## Patentansprüche

1. Verfahren zur automatischen Klassifizierung von durch ein Flusszytometer erfassten Ereignissen, wobei jedes Ereignis durch eine Reihe von n Parametern gekennzeichnet ist, wobei das Verfahren die Schritte zur Berechnung der lokalen Dichte, die jedem Ereignis entsprechen, umfassen, welche Cluster von Ereignissen im n-dimensionalen Parameterraum erkennen und jeden Cluster mit einer Population identifizieren, **dadurch gekennzeichnet, dass** der Schritt der Berechnung der lokalen Dichte, der jedem Ereignis entspricht, die folgenden Schritte umfasst:
a) Schaffen einer Reihe von n-dimensionalen Gittern verschiedener Hyperwürfelgrößen im n-dimensionalen Parameterraum;
b) Auswählen einer Hyperwürfelgröße aus dem Satz von n-dimensionalen Gittern für jedes Ereignis, wobei die Hyperwürfelgröße die Größe des Hyperwürfels mit geringerer Population aufweist, welcher das Ereignis und eine minimale Anzahl k von Ereignissen enthält; und
c) Verknüpfen einer Liste seiner p nächsten Nachbarn mit jedem Ereignis, die innerhalb des Hyperwürfels, der jedem Ereignis zugeordnet ist, und in einem maximalen Abstand d von dem Ereignis angeordnet sind und
d) Berechnen der lokalen Dichte in der Nachbarschaft jeden Ereignisses auf der Grundlage der durchschnittlichen Abstände zu den p nächsten Nachbarn des Ereignisses.

2. Verfahren zur automatischen Klassifizierung von durch ein Flusszytometer erfassten Ereignissen nach Anspruch 1, wobei Schritt c) ferner das Suchen nach den p nächsten Nachbarn in einem oder ein paar der Hyperwürfel umfasst, die dem Hyperwürfel, welcher dem Ereignis zugeordnet ist, benachbart sind.

3. Verfahren zur automatischen Klassifizierung von durch ein Flusszytometer erfassten Ereignissen nach einem der Ansprüche 1 bis 2, das ferner den folgenden Schritt umfasst:
e) Sortieren der Ereignisse gemäß ihren lokalen Dichten, um den Schritt des Findens von Clustern von Ereignissen in absteigender Reihenfolge der lokalen Dichte auszuführen.

4. Verfahren zur automatischen Klassifizierung von durch ein Flusszytometer erfassten Ereignissen nach einem der Ansprüche 1 bis 3,wobei das Verfahren anschließend an einen Schritt des Erstellens von Clustern von Ereignissen ferner den folgenden Schritt umfasst:
f) Korrigieren von Kalibrierparametern des Flusszytometers auf der Grundlage der Fehlanordnung von Clustern bezüglich der erwartbaren Populationen.

5. Verfahren nach Anspruch 4, wobei die Kalibrierparameter Photovervielfacherspannungen und Kompensationswerte umfassen.

6. System zur automatischen Klassifizierung von durch ein Flusszytometer erfassten Ereignissen, wobei jedes Ereignis durch eine Reihe von n Parametern gekennzeichnet ist, wobei das System Folgendes umfasst:
ein Flusszytometer, das eine Reihe von n Parametern, die den physikalischen Eigenschaften der Ereignisse entsprechen, erfasst;
ein Clustermodul (B), das mit dem Flusszytometer durch ein Schnittstellenmodul (A) verbunden ist, das gestaltet ist, um die lokale Dichte, die jedem Ereignis gemäß den Schritten a) bis d) nach Anspruch 1 und gegebenenfalls nach Anspruch 2 entspricht, zu berechnen und gestaltet ist, um Cluster unter den von dem Flusszytometer empfangenen Ereignisdaten zu finden und
ein Identifizierungsmodul (C), das mit dem Clustermodul, welches Cluster mit Populationen identifiziert, verbunden ist,
wobei das System ferner eine Verbindung (D) zwischen dem Identifizierungsmodul (C) und dem Schnittstellen modul (A) zum Korrigieren der Kalibrierparameter des Flusszytometers auf der Grundlage von Fehlanordnung von Clustern bezüglich erwartbarer Populationen umfasst.

## Revendications

1. Procédé pour la classification automatique d'événements obtenus par un cytomètre de flux, dans lequel chaque événement est **caractérisé par** un ensemble de paramètres n, le procédé comprenant les étapes consistant à calculer la densité locale correspondant à chaque évènement, à trouver des groupes d'événements dans l'espace de paramètre n-dimensionnel et à identifier chaque groupe à une population, **caractérisé en ce que** l'étape consistant à calculer la densité locale correspondant à chaque évènement comprend les étapes suivantes :
a) créer un ensemble de grilles n-dimensionnelles de différentes tailles d'hypercube dans l'espace de paramètre n-dimensionnel ;
b) choisir une taille d'hypercube à partir dudit ensemble de grilles n-dimensionnelles pour chaque évènement, la taille d'hypercube étant la taille de l'hypercube le moins peuplé contenant ledit événement et un nombre minimum k d'événements ; et
c) associer à chaque événement une liste de ses voisins les plus proches p situés à l'intérieur de l'hypercube assigné à chaque événement et à une distance maximale d dudit évènement, et
d) calculer la densité locale dans les voisinages de chaque évènement, sur la base des distances moyennes aux voisins les plus proches p dudit évènement.

2. Procédé pour la classification automatique d'événements obtenus par un cytomètre de flux selon la revendication 1, dans lequel l'étape c) comprend en outre la recherche des voisins les plus proches p dans un ou quelques-uns des hypercubes contigus à l'hypercube assigné à l'évènement.

3. Procédé pour la classification automatique d'événements obtenus par un cytomètre de flux selon l'une quelconque des revendications 1-2, qui comprend en outre l'étape consistant à :
e) trier les événements selon leurs densités locales afin de réaliser l'étape consistant à trouver des groupes d'événements dans l'ordre descendant de densité locale.

4. Procédé pour la classification automatique d'événements obtenus par un cytomètre de flux selon l'une quelconque des revendications 1-3, dans lequel, après une étape consistant à construire des groupes d'évènements, le procédé comprend en outre l'étape consistant à :
f) corriger les paramètres de calibrage du cytomètre de flux sur la base d'un mauvais emplacement de groupes par rapport aux populations prévisibles.

5. Procédé selon la revendication 4, dans lequel les paramètres de calibrage comprennent les voltages du multiplicateur et les valeurs de compensation.

6. Système pour la classification automatique des événements obtenus par un cytomètre de flux, dans lequel chaque événement est **caractérisé par** un ensemble de paramètres n, le système comprenant :
un cytomètre de flux, qui obtient un ensemble de paramètres n correspondant aux propriétés physiques des événements ;
un module de regroupement (B), connecté au cytomètre de flux au moyen d'un module d'interface (A) configuré pour calculer la densité locale correspondant à chaque événement selon les étapes a) à d) de la revendication 1, et optionnellement selon la revendication 2, et configuré pour trouver des groupes parmi les données d'événements reçus du cytomètre de flux ; et
un module d'identification (C), connecté au module de regroupement, qui identifie des groupes à des populations,
le système comprenant en outre une connexion (D) entre le module d'identification (C) et le module d'interface (A) pour corriger les paramètres de calibrage du cytomètre de flux sur la base d'un mauvais emplacement de groupes par rapport aux populations prévisibles.
